# DEMANDE DE BREVET EUROPEEN

(11) **EP 3 913 927 A2**
(43) Date de publication de la demande: **24.11.2021**
(21) Numéro de dépôt: 21171200.5
(22) Date de dépôt: 29.04.2021
(51) Int. Cl.: H04R 1/10, H04R 5/04

(54) **CASQUE STEREO ET PROCEDES DE PARTAGE DE CONTENU ET D'AUTHENTIFICATION**

(30) Priorité: 20.05.2020 FR 2005163
(71) Demandeur: Bounamin Sylla, Omar, 92150 Suresnes (FR); Zenzane, Malika, 92150 Suresnes (FR)
(72) Inventeur: Bounamin Sylla, Omar, 92150 Suresnes (FR); Zenzane, Malika, 92150 Suresnes (FR)
(74) Mandataire: Nony

(57) **Abrégé**

Casque stéréo (1) comportant deux écouteurs (2) présentant chacun un boîtier (4), au moins un circuit électronique (20) logé dans le boîtier de l'un au moins des écouteurs, configuré pour permettre d'appairer le casque avec un terminal distant (M) tel qu'un téléphone portable et d'établir une liaison sans fil avec celui-ci, ce circuit électronique comportant :
o Une mémoire interne (202) de plus de 32 Go de capacité,
o un lecteur audio permettant de lire des fichiers audio, notamment ceux enregistrés dans cette mémoire interne, et
o une interface (201) permettant de sélectionner comme source à diffuser dans les écouteurs le lecteur audio du casque ou le terminal appairé (M).

## Description

### Domaine technique

La présente invention concerne un casque stéréo et des procédés de partage de contenu et d'authentification du casque associés.

### Technique antérieure

Les casques stéréo haut de gamme proposés aujourd'hui comportent classiquement un circuit électronique qui permet une connexion sans fil, notamment par Bluetooth, à un terminal tel qu'un smartphone, sur lequel sont stockés les contenus musicaux à écouter, ou sur lequel une application de streaming musical est ouverte.

Dans certaines circonstances, par exemple en raison d'interférences liées à la présence à proximité d'équipements électriques, la qualité de la liaison sans fil entre le portable et le casque peut être perturbée, ce qui nuit à la qualité de l'écoute.

De plus, pour préserver l'autonomie de leur portable, certaines personnes aimeraient pouvoir en minimiser la consommation électrique pendant l'écoute d'un morceau de musique, ce qui n'est pas toujours possible ou facile à paramétrer.

Il y a donc un intérêt à bénéficier d'un casque permettant une qualité d'écoute satisfaisante même en cas de perturbations gênant la communication sans fil entre le portable et le casque, et permettant de préserver l'autonomie du portable en cas de besoin.

De nombreux casques présents sur le marché présentent par ailleurs un mécanisme permettant de replier les écouteurs vers l'intérieur, afin d'en diminuer l'encombrement en l'absence d'utilisation et faciliter leur rangement. De nombreux modèles comportent ainsi une double articulation au niveau de l'arceau de tête, à savoir une première articulation autour d'un axe passant par le plan médian de l'écouteur, qui permet d'orienter l'écouteur à plat, et une deuxième articulation autour d'un axe perpendiculaire au premier, pour replier l'écouteur vers l'intérieur de l'arceau.

Une telle structure complexifie la réalisation du casque et peut entraîner une plus grande fragilité du casque dans certains cas.

Il existe donc un besoin pour gagner en robustesse tout en conservant une conception permettant de diminuer sensiblement l'encombrement du casque en l'absence d'utilisation.

Il demeure également un intérêt pour bénéficier d'un casque qui soit de port confortable y compris lorsqu'accroché au cou de l'utilisateur, et ergonomique, notamment qui permettre d'interrompre ou de reprendre facilement l'écoute.

Enfin, de nombreux utilisateurs souhaiteraient pouvoir partager l'écoute d'un morceau de musique avec d'autres personnes, et disposer d'une sécurité accrue contre le risque de vol. S'il est possible de partager des listes de lecture, les solutions existantes ne permettent pas de partager en temps réel l'écoute d'un morceau.

US 2014321662 décrit un dispositif d'écoute programmable par l'utilisateur à disposer sur la tête. Le dispositif d'écoute comprend un ensemble de systèmes électroniques programmables par l'utilisateur offrant la possibilité de balayer, détecter, sélectionner et lire des fichiers audio et vidéo à partir de différentes sources filaires ou sans fil.

### Exposé de l'invention

L'invention vise à répondre à tout ou partie des besoins rappelés ci-dessus.

### Résumé de l'invention

L'invention a ainsi pour objet, selon un premier de ses aspects, un casque stéréo comportant au moins :
- Deux écouteurs présentant chacun un boîtier,
- un arceau de tête reliant les boîtiers des écouteurs,
- au moins un circuit électronique logé au moins partiellement dans le boîtier de l'un au moins des écouteurs, configuré pour permettre d'appairer le casque à un terminal distant tel qu'un téléphone portable et d'établir une liaison sans fil avec celui-ci, ce circuit électronique comportant :
   ∘ Une mémoire interne, de préférence de plus de 32 Go de capacité,
   ∘ un lecteur audio permettant de lire des fichiers audio, notamment ceux enregistrés dans cette mémoire interne, et
   ∘ une interface permettant de sélectionner comme source à diffuser dans les écouteurs le lecteur audio du casque ou le terminal appairé.

De préférence, la mémoire interne a une capacité de 64 Go ou plus, mieux de 128 Go ou plus.

Grâce à la présence de cette mémoire interne, l'utilisateur peut déverser dans celle-ci l'ensemble des fichiers audio qu'il souhaite pouvoir écouter, et n'est plus dépendant ensuite de la qualité de la liaison avec son portable pour les écouter. Le casque seul peut ensuite être utilisé, si l'utilisateur souhaite éteindre son portable pour en préserver l'autonomie.

La mémoire interne est de préférence non amovible par l'utilisateur sans procéder au démontage poussé du casque, c'est-à-dire enlever des pièces qui ne sont pas prévues pour être enlevées par l'utilisateur, et dont l'enlèvement peut faire perdre la garantie du fabricant.

La mémoire interne est de préférence une mémoire électronique, intégrée au circuit électronique sous forme d'un ou plusieurs circuits mémoire soudés ou enfichés sur un connecteur du circuit électronique tel qu'un connecteur de carte SD par exemple.

Le casque peut être dépourvu de connecteur de carte mémoire du type carte SD, accessible depuis l'extérieur du casque ou après démontage d'une trappe d'accès spécifique, visible depuis l'extérieur du casque. Cela permet de gagner en fiabilité et de préserver l'esthétique du casque.

Chaque écouteur peut comporter un coussinet de forme annulaire, de préférence à mémoire de forme, adapté à venir en appui sur l'oreille de l'utilisateur, monté de façon amovible sur le boîtier de l'écouteur. Cela permet le remplacement du coussinet directement par l'utilisateur, sans avoir à renvoyer le casque au SAV. Cela permet aussi de proposer le casque avec plusieurs coloris de coussinets, et ainsi d'en améliorer l'esthétique.

Le boîtier d'écouteur peut présenter une gorge périphérique, cette gorge étant de préférence délimitée, du côté du coussinet, par la bordure d'une coupelle de support d'un haut-parleur et de l'autre côté par un couvercle intérieur du boîtier de l'écouteur, la coupelle de support présentant de préférence une encoche ouverte sur sa périphérie, facilitant l'insertion du coussinet dans la gorge en vue de son montage et/ou de sa séparation du boîtier. Ainsi, l'utilisateur n'a qu'à engager la bordure du coussinet dans cette gorge et effectuer un tour complet avec le coussinet pour monter la bordure dans la gorge et installer le coussinet sur le boîtier de l'écouteur. La réalisation de la gorge par assemblage de deux pièces facilite la réalisation de chaque pièce, et permet de réaliser l'encoche avec une forme facilitant l'introduction du coussinet.

De préférence, l'encoche servant au montage du coussinet débouche à l'extérieur par un rétrécissement, et présente une forme dyssymétrique ; cela permet de ménager une languette dont le sommet définit le rétrécissement précité. Une telle languette présente une certaine flexibilité, ce qui facilite l'insertion du coussinet dans la gorge précitée avant de le faire tourner sur lui-même pour l'engager progressivement dans celle-ci. De plus, l'orientation de la languette peut rappeler la direction d'insertion dans la gorge à l'utilisateur.

Le boîtier peut comporter un corps présentant une paroi latérale de préférence de forme cylindrique et une extension supérieure, de raccordement à l'arceau de tête, venue de moulage avec la paroi latérale, cette extension présentant de préférence une forme arquée, et logeant au moins partiellement un mécanisme à glissière télescopique qui permet de régler la hauteur de l'arceau de tête par rapport aux boîtiers des écouteurs.

La glissière peut être articulée à son extrémité supérieure sur la partie centrale de l'arceau de tête. Ainsi, chaque écouteur peut ne présenter qu'un seul degré de liberté en rotation, autour d'un unique axe de rotation défini par l'articulation. Cela apporte de la robustesse sur le plan mécanique.

L'arceau de tête comporte de préférence une mousse à mémoire de forme disposée entre un support extérieur, de forme arquée, et une pièce d'appui intérieure, réalisée dans une matière élastomère, de préférence un silicone, en particulier un silicone traité à l'huile. La présence de cette mousse intermédiaire contribue au confort de l'utilisateur.

L'un des boîtiers d'écouteurs au moins peut présenter sur sa face extérieure une pièce centrale, notamment en forme de disque, mobile relativement au corps du boîtier, et sur laquelle l'utilisateur peut appuyer, cette pièce permettant d'actionner un interrupteur du circuit électronique, le circuit électronique étant de préférence réalisé de telle sorte que l'interrupteur commande la marche/arrêt du casque en cas d'appui long, la lecture/pause ou le décrocher/raccrocher, en cas d'appui bref. Une telle commande de l'interrupteur via la pièce centrale, qui sert en quelque sorte que gros bouton de contrôle, s'avère facile et permet de ne pas avoir à tâtonner pour trouver les touches sur lesquelles appuyer. L'utilisateur peut facilement interrompre l'écoute d'un morceau et la reprendre, même s'il porte des gants ou tient quelque chose dans sa main.

Le boîtier qui loge au moins partiellement le circuit électronique peut comporter une paroi de fermeture du logement recevant le circuit électronique, munie d'un renfoncement qui accueille une carte portant ledit interrupteur électronique, ce renfoncement étant fermé au moins partiellement par la pièce centrale. Cette structure à deux étages permet de gagner en compacité et d'avoir une forme de boîtier de plus petit diamètre du côté opposé au coussinet, moins massive et plus esthétique.

La paroi de fermeture peut présenter une ouverture traversée par un connecteur reliant la carte portant l'interrupteur à une carte principale disposée dans le boîtier, sous la paroi de fermeture. Le montage de la carte portant l'interrupteur peut s'en trouver facilité.

La pièce centrale peut porter un logo, entre autres possibilités décoratives. Le fait que la pièce centrale soit réalisée séparément peut en faciliter la décoration. La pièce centrale peut comporter des pattes élastiquement déformables, qui la rappelle dans une position de repos. Ces pattes peuvent être venues de moulage avec la pièce centrale. La présence de ces pattes permet d'utiliser un interrupteur miniature, sans force de rappel importante.

L'un des boîtiers des écouteurs comporte de préférence un capot amovible en définissant la face extérieure, ce capot amovible permettant d'accéder, lorsqu'enlevé, à un compartiment logeant une batterie. Ce boîtier logeant la batterie est avantageusement différent de celui recevant la carte de circuit principal, ce qui permet d'équilibrer le poids du casque entre l'écouteur gauche et l'écouteur droit.

De préférence, l'un des boîtiers porte une prise jack de sortie d'un signal audio analogique et/ou l'un des boîtiers porte une prise jack d'entrée d'un signal audio analogique, et de préférence l'un des boîtiers porte l'une des prises et l'autre boîtier l'autre prise. Le fait de prévoir des prises sur les deux boîtiers d'écouteurs permet de limiter le nombre de prises sur chaque boîtier, et ainsi de préserver l'esthétique du casque ainsi que son équilibre.

Le casque peut comporter au moins deux boutons disposés sur le boîtier d'un écouteur, le circuit électronique étant configuré de telle sorte qu'une pression continue sur l'un des boutons corresponde à une augmentation ou à une baisse du volume selon le bouton utilisé, et qu'un double enfoncement rapproché corresponde selon le bouton utilisé au passage à la liste suivante ou précédente. Une telle commande s'avère pratique et intuitive.

Le circuit électronique comporte de préférence un identifiant qui est propre au casque, le circuit électronique étant configuré pour communiquer au terminal avec lequel il est appairé cet identifiant. Cet identifiant est de préférence stocké de façon cryptée dans la mémoire du casque. Le terminal exécute une application permettant de le décrypter, soit directement, soit après échange avec un serveur externe avec lequel le terminal peut communiquer.

De préférence, le casque peut ainsi ne communiquer avec un serveur externe qu'au travers d'un terminal avec lequel il est appairé, ce qui permet d'éviter d'embarquer sur le casque un module de communication réseau complexe et permet de déporter la fonction d'authentification sur une application embarquée sur le terminal, pouvant bénéficier de la puissance du processeur présent sur celle-ci.

Le circuit électronique peut comporter un module de communication NFC. Ce dernier peut être utilisé pour appairer rapidement le casque au terminal. Le casque peut être agencé de telle sorte qu'il suffit à l'utilisateur de placer le téléphone contre le casque pour que l'appairage se réalise et établir la connexion Bluetooth.

L'arceau de tête présente avantageusement une courbure autour d'un premier axe géométrique contenu dans un plan médian de part et d'autre duquel sont disposés les deux écouteurs, ainsi qu'une courbure autour d'un deuxième axe géométrique contenu dans le même plan médian mais sensiblement perpendiculaire au premier axe. De préférence l'extension précitée, qui est monolithique avec le corps du boîtier d'écouteur, forme un virage vers le haut et l'intérieur lorsque le casque est observé de l'arrière avec la partie centrale de l'arceau de tête dirigé vers l'observateur, orientée de manière à être incurvée vers le bas. Une telle forme ondulée assure plus de dégagement pour la partie centrale de l'arceau de tête lorsque le casque est laissé autour du cou sans être mis sur les oreilles, donc plus de confort. Cela permet également un positionnement sensiblement parallèle des axes des articulations permettant de rabattre les écouteurs, gage d'une meilleure compacité après repliement du casque.

La présence des extensions précitées, qui prolongent vers le haut les boîtiers des écouteurs et qui logent les glissières permettant le réglage en hauteur, permet de décaler vers le haut les articulations, et donc de rabattre sur un plus grand rayon les écouteurs pour aboutir à une configuration de rangement relativement compacte, sans avoir besoin de prévoir une double articulation sur chaque écouteur. Cela permet de gagner en compacité, robustesse et fiabilité.

L'invention a encore pour objet, selon un autre de ses aspects, un procédé de partage quasi-instantané d'un contenu entre au moins deux utilisateurs équipés chacun d'un casque selon l'invention, tel que défini plus haut, et d'un terminal tel qu'un téléphone portable exécutant une application de partage de contenus et auquel le casque est appairé, ces utilisateurs ayant préalablement enregistré leur casque sur un serveur, ce procédé comportant les étapes consistant à :
- Permettre à un utilisateur de sélectionner au moins un contenu à écouter et au moins un autre utilisateur avec qui il souhaite partager l'écoute de ce contenu,
- uploader le contenu vers un serveur de streaming,
- relayer avec le serveur de streaming ce contenu ainsi uploadé vers le ou les utilisateurs sélectionnés.

Le procédé peut comporter l'envoi, vers le ou les utilisateurs sélectionnés pour partager le contenu, de l'url du flux partagé, d'un identifiant de l'utilisateur souhaitant partager un contenu, notamment le nom de l'utilisateur, et d'un identifiant du contenu partagé, notamment l'un au moins du nom du morceau partagé, de l'auteur du morceau, de sa durée, du nombre de personnes avec qui le morceau est partagé, de la durée du flux, de la résolution audio, du nom de l'album, d'une image de la pochette du morceau, le nom de l'éditeur et/ou de la maison de disques.

Le contenu partagé peut être mémorisé sur la mémoire interne de l'utilisateur qui souhaite partager le morceau. En variante, ce contenu partagé est enregistré sur la mémoire du terminal. En variante encore, ce contenu est reçu en streaming par le terminal.

De préférence, le procédé est tel que :
a) dans l'hypothèse où un utilisateur sélectionné pour partager le contenu a déjà son application ouverte sur son terminal, l'application génère une notification visuelle, tactile et/ou sonore invitant l'utilisateur à écouter le contenu partagé, et si l'utilisateur accepte de démarrer le streaming du contenu partagé, l'application interrompt l'écoute en cours pour transmettre le flux du contenu partagé au casque pour son écoute en temps quasi-réel,
b) dans l'hypothèse où l'application n'est pas ouverte sur le terminal de l'utilisateur, le terminal affiche une notification liée à l'application, qui invite l'utilisateur à ouvrir l'application afin d'écouter le contenu partagé en streaming.

L'invention a encore pour objet, selon un autre de ses aspects, un procédé pour authentifier un casque selon l'invention, tel que défini plus haut, comportant un identifiant stocké de façon cryptée dans sa mémoire, ce procédé comportant les étapes consistant à :
- Appairer le casque à un terminal exécutant une application,
- transmettre à l'application l'identifiant crypté,
- saisir sur l'application un code fourni avec le casque lors de son acquisition,
- comparer le code avec l'identifiant, cette comparaison s'effectuant de manière automatisée au sein de l'application, et en cas de correspondance entre les deux, rendre possible l'enregistrement du casque sur un serveur distant.

Le serveur peut mémoriser, lors de cet enregistrement, un numéro de série du casque, une adresse mail de l'utilisateur associé au casque et son numéro de téléphone.

Le procédé d'authentification peut prévoir qu'en cas de connexion du casque à une application qui ne le reconnaît pas, suite par exemple à un transfert de propriété du casque ou de vol de celui-ci, l'application demande à l'utilisateur le numéro de série du casque pour permettre à l'utilisateur d'accéder aux fonctionnalités de l'application. L'application peut transmettre ce numéro de série au serveur, pour vérification.

De préférence, le casque est agencé de telle sorte qu'un casque non authentifié ne permette pas l'utilisation de l'application dédiée mais laisse les autres fonctionnalités opérationnelles.

Dans un exemple de mise en œuvre, pour authentifier un casque, ce dernier étant attribué à un propriétaire, les étapes suivantes sont mises en œuvre (A) :
- A la première utilisation du casque (casque vierge ou non attribué), l'application demande le numéro de série du casque ainsi qu'un jeu d'informations de l'utilisateur, par exemple nom, numéro de téléphone et adresse mail ; par exemple, le numéro de série fourni à l'utilisateur sur sa carte de garantie peut être scanné par l'application ou saisi manuellement ;
- l'application compare le numéro saisi ou scanné avec le numéro qu'elle extrait de façon cryptée du casque ;
- si le numéro de série correspond, les informations utilisateur sont utilisées pour l'associer au casque par le biais du serveur ; cette opération nécessite une connexion internet ;
- le serveur vérifie si le numéro de série n'est pas attribué à un autre utilisateur et si le numéro de série correspond bien à un casque authentique et n'est pas sur liste de numéros de série correspondant à des casques volés ou perdus (liste noire) dont il dispose ;
- si le serveur approuve l'opération, il mémorise l'attribution du casque à l'utilisateur et autorise l'application à poursuivre l'association ;
- l'application injecte un identifiant utilisateur dans le casque ;
- le casque est à ce stade authentifié et l'application le mémorise dans la liste des appareils valides (dans le cache de l'application).

A l'utilisation d'un casque précédemment authentifié par un autre utilisateur :
- Au lancement de l'application sur un terminal tel qu'un téléphone d'un autre utilisateur n'ayant pas effectué les opérations ci-dessus (A), l'application demande le numéro de série du casque sans les coordonnées de l'utilisateur ;
- l'utilisateur doit être muni de la carte de garantie afin de scanner ou écrire le numéro de série ;
- l'application compare le numéro saisi ou scanné avec le numéro qu'elle extrait de façon cryptée du casque ;
- si le numéro de série correspond, une vérification est faite en communicant le numéro de série au serveur. Cette opération nécessite obligatoirement une connexion internet.
- le serveur vérifie si le numéro de série correspond bien à un casque authentique et n'est pas sur une liste noire dont il dispose ;
- si le serveur approuve l'opération, l'application mémorise le casque dans la liste des appareils valides (dans le cache de l'application).
- les informations concernant l'utilisateur d'origine sont récupérées du serveur mais ne sont que partiellement visibles pour l'utilisateur de l'application, qui ne peut les modifier qu'après vérification.

Modification des données :
- De préférence, toute opération de modification des données de l'utilisateur (mail, numéro de téléphone) ou de suppression du casque (suppression du lien utilisateur casque) nécessite la saisie du numéro de série ; l'application valide alors le numéro de série saisi avec celui du casque ;
- si le numéro de série correspond, les informations modifiées sont envoyées au serveur. Cette opération nécessite une connexion internet.
- le serveur vérifie la cohérence des anciennes données de la modification, si le numéro de série correspond bien à un casque authentique et n'est pas sur une liste noire dont il dispose ;
- si le serveur approuve l'opération, il mémorise les changements et autorise l'application à poursuivre la modification ; l'application modifie les données dans le casque (suppression ou modification de l'identifiant utilisateur) puis l'application modifie les informations du casque dans liste des appareils valides (dans le cache de l'application).

### Brève description des dessins

L'invention pourra être mieux comprise à la lecture de la description détaillée qui va suivre, d'un exemple de mise en œuvre non limitatif de celle-ci, et à l'examen du dessin annexé, sur lequel :
[Fig 1] la figure 1 est une vue arrière d'un exemple de casque selon l'invention,
[Fig 2] la figure 2 est une vue en perspective du casque selon un autre angle de vue, avec enlèvement de l'un des coussinets d'écouteur,
[Fig 3] la figure 3 illustre l'enlèvement du capot donnant accès au logement de batterie,
[Fig 4] la figure 4 est une coupe schématique et partielle d'un écouteur,
[Fig 5] la figure 5 représente isolément le capot fermant le logement de batterie,
[Fig 6] la figure 6 représente isolément la pièce centrale de commande de l'interrupteur,

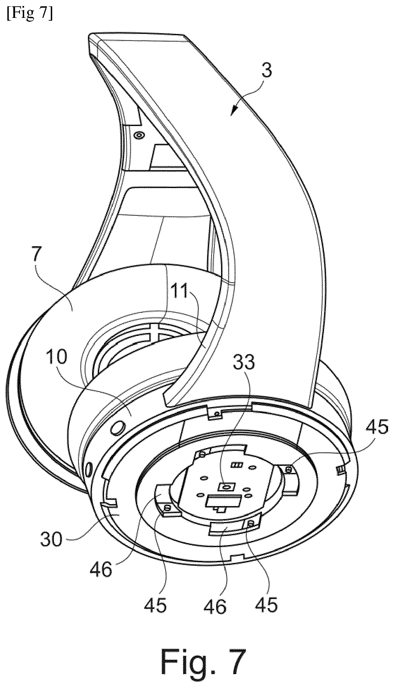

[Fig 7] la figure 7 représente le casque après enlèvement du capot extérieur et de la pièce centrale de commande de l'interrupteur,
[Fig 8] la figure 8 représente isolément la pièce formant le corps du boîtier d'écouteur,
[Fig 9] la figure 9 représente isolément le couvercle de fermeture du boîtier d'écouteur,

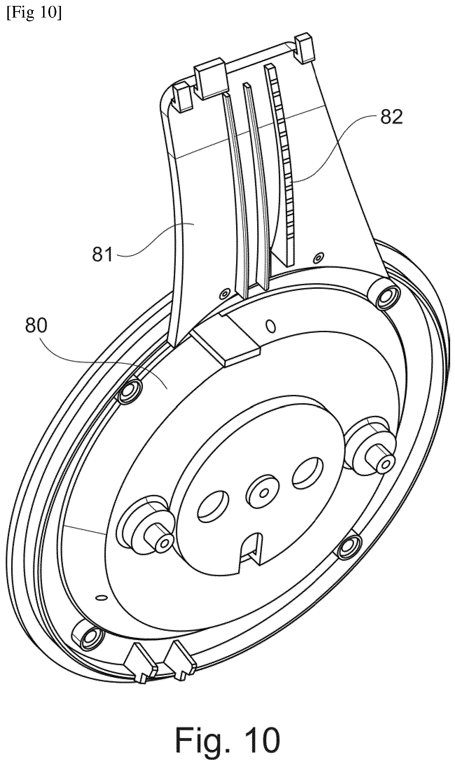

[Fig 10] la figure 10 représente la pièce de la figure 9 sous un autre angle de vue,
[Fig 11] la figure 11 représente le casque après enlèvement du corps de boîtier,
[Fig 12] la figure 12 représente l'arceau de tête sans la pièce d'appui,
[Fig 13] la figure 13 est une vue analogue à la figure 12 avec la mousse à mémoire de forme enlevée,
[Fig 14] la figure 14 illustre la réalisation de la charnière,
[Fig 15] la figure 15 représente le casque après enlèvement d'une partie des constituants d'un écouteur, et
[Fig 16] la figure 16 est une coupe schématique et partielle de l'arceau de tête,
[Fig 17] la figure 17 est un schéma en blocs du circuit électronique du casque,
[Fig 18] la figure 18 illustre la diffusion d'un contenu à d'autres utilisateurs,
[Fig 19] la figure 19 représente des étapes du procédé de diffusion de contenu, et
[Fig 20] la figure 20 représente des étapes du procédé d'authentification du casque.

### Description détaillée

Le casque 1 selon l'invention, représenté sur les figures, comporte deux écouteurs 2, gauche et droite, reliés par un arceau 3.

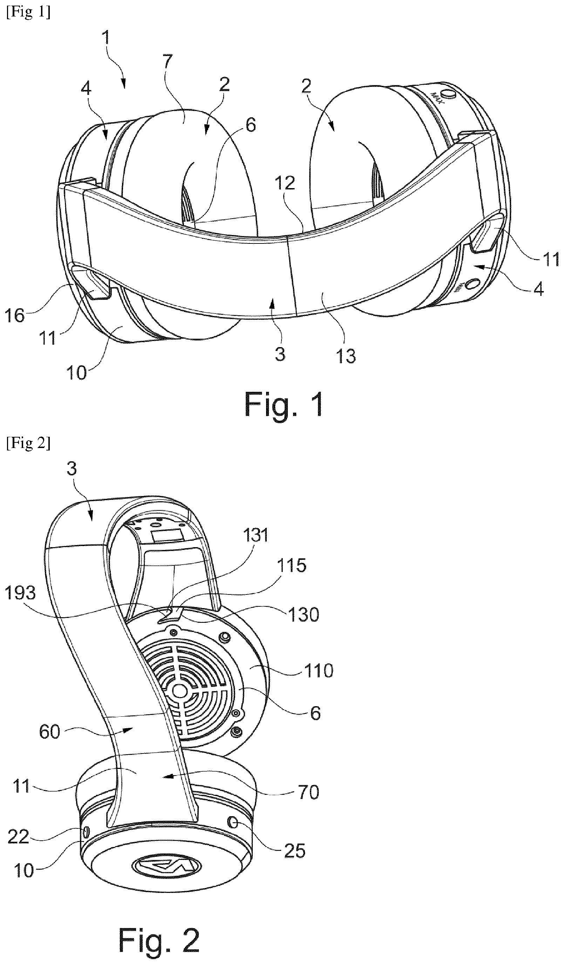

Chaque écouteur 2 comporte un boîtier 4 contenant au moins un haut-parleur 5, visible sur la figure 1, recouvert par une grille 6. Chaque boîtier 4 porte un coussinet annulaire 7, réalisé dans un matériau souple.

Chaque boîtier 4 comporte un corps 10 présentant une paroi latérale, par exemple de forme générale cylindrique de révolution, prolongée vers le haut par une extension 11 venue de moulage de matière plastique avec le reste du corps 10.

L'extension 11 est légèrement incurvée vers le haut et vers l'intérieur lorsque le casque est observé de l'arrière comme sur la figure 1, et l'arceau 3 comporte une partie centrale 13 présentant une forme arquée concave vers le haut, ce qui donne à l'arceau complet une forme ondulée améliorant le confort du port du casque lorsque celui-ci est accroché autour du cou, le bord supérieur 12 de la partie centrale 13 de l'arceau tendant à épouser la forme de la nuque.

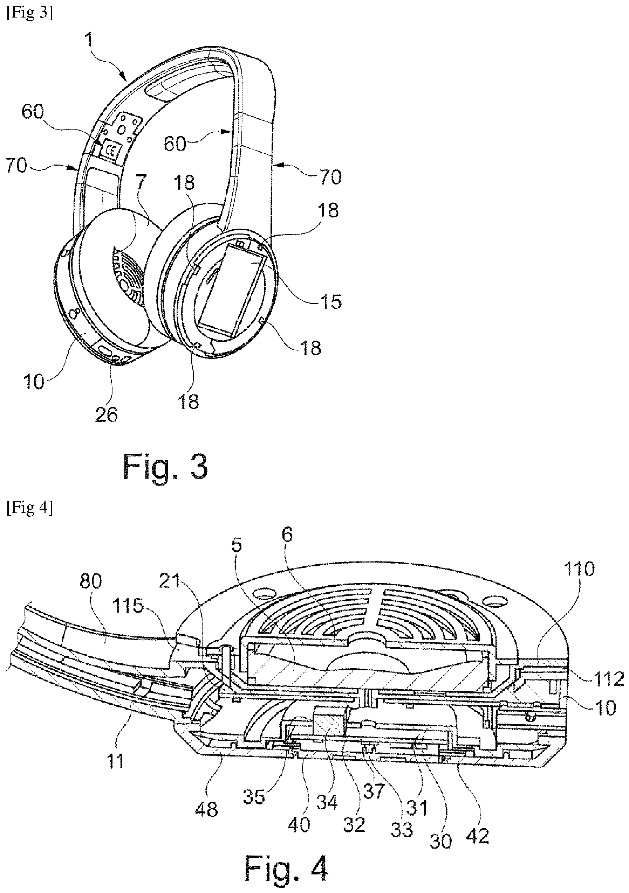

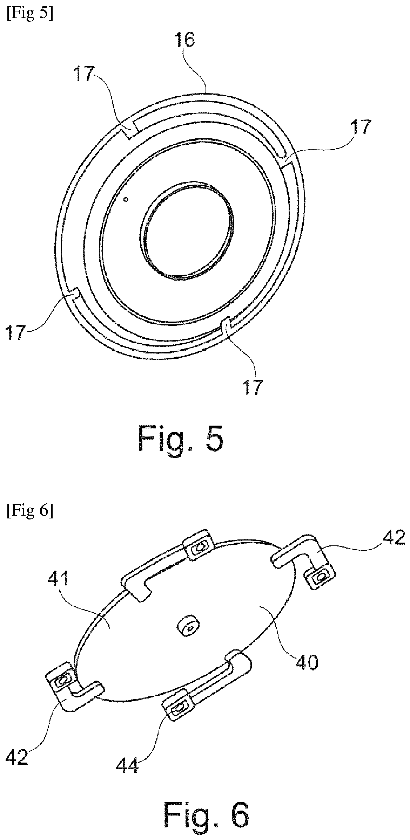

L'un des boîtiers 4, en l'espèce celui de l'écouteur droit sur la figure 3, loge une batterie 15, accessible après retrait d'un capot amovible 16, représenté isolément sur la figure 5. Ce capot 16 peut se fixer par un mouvement de rotation sur le boîtier 4, grâce à des dents de verrouillage 17, engagées dans des encoches correspondantes 18 ménagées sur le boîtier 4.

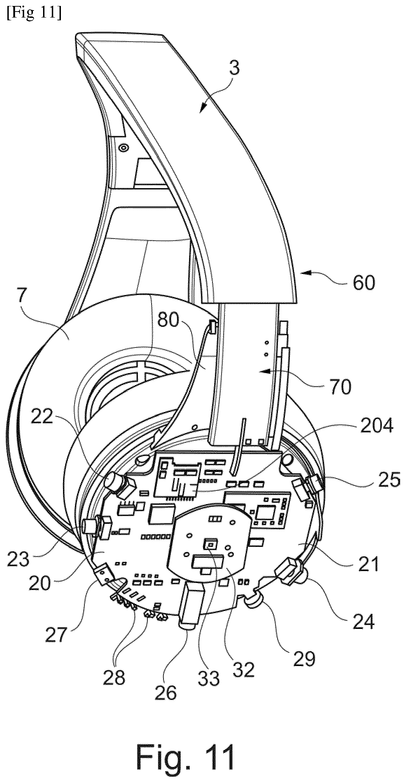

L'autre boîtier 4, à savoir celui de gauche sur la figure 3, loge un circuit électronique principal 20, visible sur la figure 11.

Ce circuit 20 comporte une carte de circuit imprimé 21, qui porte des boutons de commande 22, 23, 24 et 25 accessibles à travers des ouvertures ménagées dans le pourtour du corps 10 du boîtier. La carte 21 porte également une prise jack 26 et un connecteur 27, par exemple de type USB, pour l'alimentation du casque. Des guides optiques 28 débouchant sur l'extérieur du boîtier sont éclairés par diverses LEDs montées sur la carte 21.

Le circuit électronique 20 est configuré par exemple de telle sorte qu'une pression continue sur l'un des boutons 22 et 23 corresponde, selon le bouton, à une augmentation ou à une baisse du volume, et qu'un double enfoncement rapproché corresponde selon le bouton utilisé au passage à la liste suivante ou précédente.

Le bouton 24 peut servir à provoquer l'affichage du niveau de la batterie et le bouton 25, lors d'un appui court, à la sélection de la source, par exemple soit une source externe communiquant par Bluetooth tel qu'un smartphone, soit la mémoire interne, et lors d'un appui long, à provoquer l'appairage sans fil, par exemple par Bluetooth de manière conventionnelle, ou l'appairage avec une application dédiée exécutée par l'appareil avec lequel le casque a été préalablement appairé. Le circuit électronique peut être agencé pour qu'un appui prédéfini sur les boutons de commande, par exemple un appui simultané sur tous les boutons, provoque la réinitialisation du casque.

Chaque écouteur peut comporter un microphone 29, celui de l'écouteur comportant le circuit électronique principal 20 étant porté par la carte 21.

La prise jack 26 peut servir d'entrée audio et/ou de liaison à un dispositif de commande à distance monté sur le câble relié à cette prise jack.

La prise jack 58 présente sur l'autre écouteur peut servir de sortie audio analogique.

Le circuit électronique 20 peut également comporter un module NFC 209 permettant un appairage rapide du casque avec un smartphone disposant de cette fonctionnalité.

Le corps 10 du boîtier 4 présente une paroi de fermeture 30, visible sur la figure 4, qui comporte un renfoncement 31 pour loger une carte de circuit imprimé 32, portant un interrupteur 33.

La carte 32 porte un connecteur 34 qui est enfiché sur la carte 21 à travers une ouverture 35 de la paroi 30 débouchant dans le fond du renfoncement 31.

L'interrupteur 33 est commandé par une pièce centrale 40, représentée isolément sur la figure 11, montée sur la paroi 30 avec une possibilité de mouvement relativement à celle-ci. La pièce centrale 40 peut présenter, comme illustré, un picot central 37 venant appuyer sur l'interrupteur 33.

La pièce centrale 40 comporte, comme illustré sur la figure 6 notamment, un disque 41, qui peut porter un logo sur sa face extérieure, et des pattes élastiques 42 qui assure le maintien du disque 41 tout en permettant son enfoncement pour actionner l'interrupteur 33. Les pattes 42 présentent par exemple en extrémité un trou 44 de montage sur un picot correspondant 45 du corps 10. Des dégagements 46 sont pratiqués dans le corps 10 pour accueillir les pattes 42 et leur permettre de se déformer en fléchissant lors de l'appui sur la partie centrale 40 par l'utilisateur.

La pièce centrale 40 est maintenue sur le corps 10 par un capot 48, similaire au capot 16 de l'autre écouteur, hormis la présence de l'ouverture accueillant la pièce centrale 40.

Le circuit électronique du casque est de préférence réalisé de telle sorte que l'interrupteur 33 commande la marche/arrêt du casque en cas d'appui long, la lecture/pause ou le décrocher/raccrocher, en cas d'appui bref. La pièce centrale 40 sert en quelque sorte que gros bouton de contrôle, qui permet à l'utilisateur de ne pas avoir à tâtonner pour trouver la touche sur laquelle appuyer pour une fonction aussi importante que la suspension de l'écoute ou le décrocher/raccrocher.

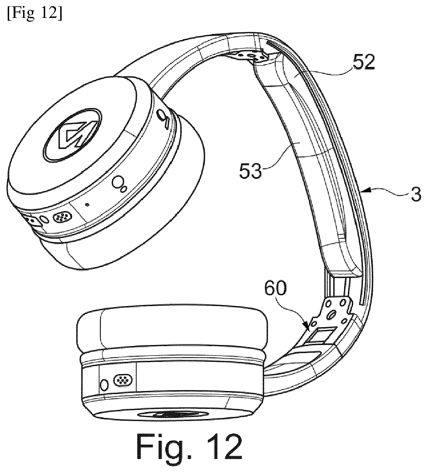

L'arceau 3 comporte sur la face interne de sa partie centrale une pièce d'appui 50, en matière élastomère, visible notamment sur la figure 12, la matière élastomère étant par exemple une silicone traitée avec de l'huile pour avoir une plus grande douceur au toucher.

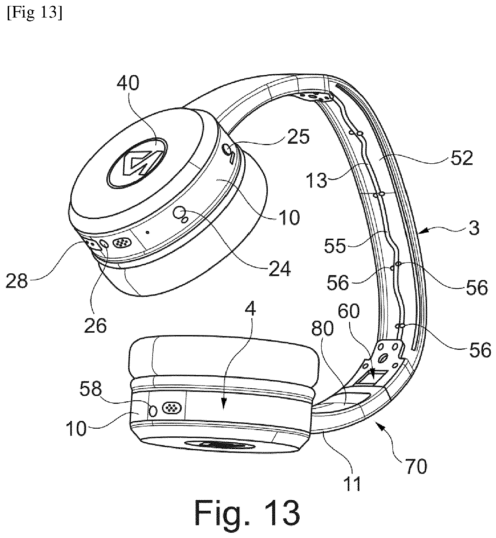

La face extérieure de la partie centrale de l'arceau 3 est définie par une pièce rigide 52, visible sur la figure 13, qui porte une mousse 53 en un matériau à mémoire de forme. On peut voir sur la figure 13 un câble 55 reliant les écouteurs gauche et droit, s'étendant sous la mousse 53, entre des couples de picots de guidage 56.

Le casque 1 comporte des articulations 60 permettant de faire pivoter les écouteurs 2 vers l'intérieur de l'arceau 3 pour diminuer son encombrement en l'absence d'utilisation.

Ces articulations 60 sont présentes à l'extrémité supérieure de mécanismes à glissière 70, servant au réglage de la hauteur de l'arceau 3.

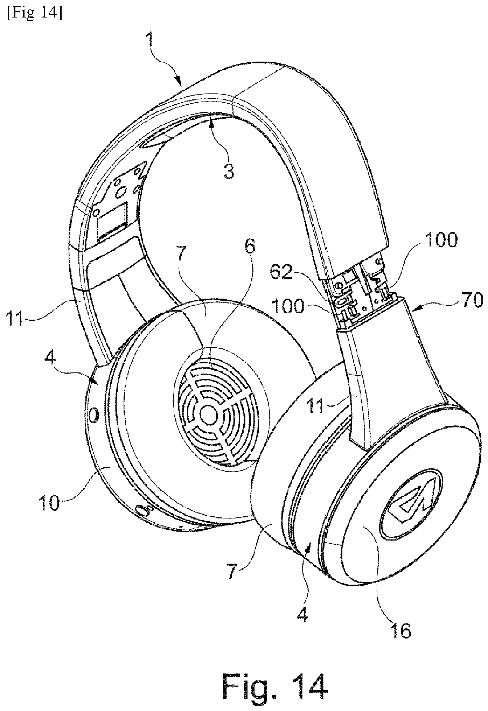

Chaque articulation 60 comporte un axe 62, de préférence métallique, visible sur la figure 14, qui sert de pivot.

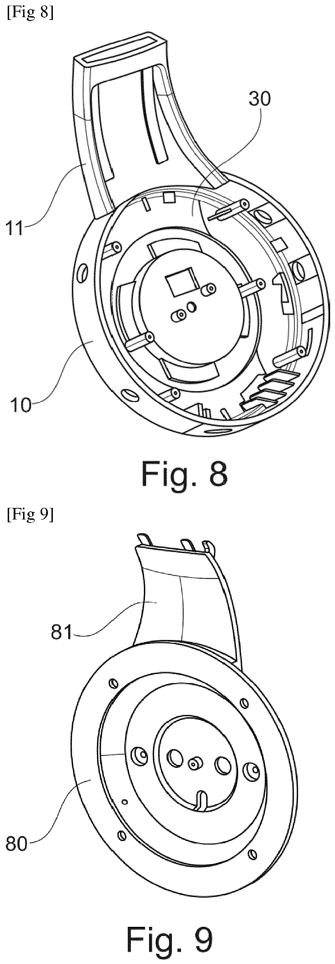

Chaque corps 10 de boîtier 4 est fermé, du côté du coussinet 7, par un couvercle 80, visible sur la figure 9. Ce couvercle 80 comporte une extension 81, venue de moulage de matière plastique avec le reste de la pièce, qui porte sur sa face interne une denture 82 définissant des crans de réglage de la hauteur de l'arceau 3.

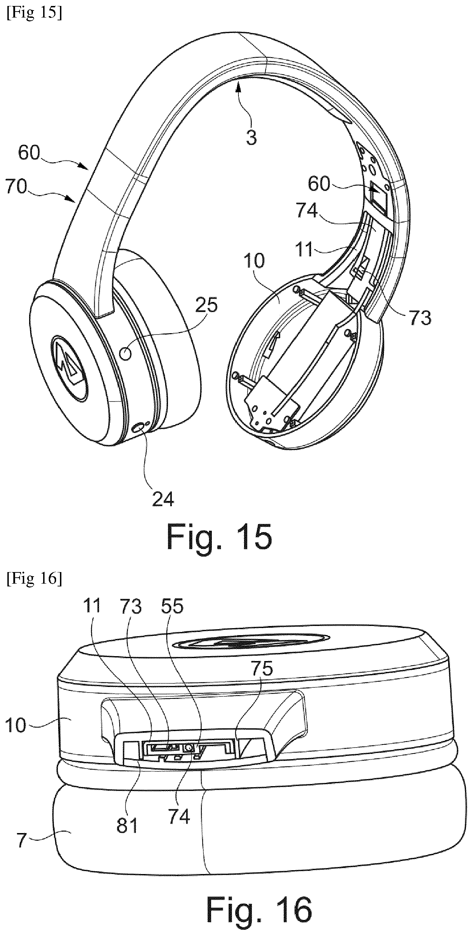

On voit sur la figure 16 que le mécanisme à glissière 70 comporte deux éléments métalliques 74 et 75 pouvant coulisser l'un dans l'autre, l'élément 74 le plus intérieur portant un curseur formé par une lame élastique 73, qui vient frotter sur la denture 82, chaque cran de celle-ci définissant une position de réglage possible.

La présence des articulations 60 au-dessus des mécanismes à glissière 70 permet de rapprocher davantage les écouteurs du sommet de l'arceau 3 lorsque ces derniers sont rabattus vers l'intérieur, ce qui permet de gagner en compacité.

Des pattes élastiques 100, présentes au niveau des articulations 60, visibles sur la figure 14, assurent un maintien des écouteurs en position d'écoute, lors de l'utilisation du casque.

Une coupelle 110 de support du haut-parleur 5 est fixée extérieurement sur le couvercle 80 et ménage avec ce dernier une gorge annulaire 112 servant à la fixation du coussinet 7, comme on peut le voir sur la figure 4 notamment.

Le coussinet 7 comporte une toile destinée à recouvrir la grille 6 et une bordure destinée à s'engager dans la gorge 112 pour maintenir le coussinet sur le boîtier 4.

Pour permettre un montage facilité du coussinet 7 sur le boîtier, la coupelle 110 présente une encoche 115, comme illustré sur la figure 2, débouchant sur sa périphérie, dans laquelle la bordure du coussinet 7 peut être engagée pour être introduite dans la gorge 112. Il suffit alors pour monter le coussinet de faire tourner celui-ci relativement au boîtier sur un tour complet, pour engager progressivement toute la bordure dans la gorge 112.

L'encoche 115 est délimitée d'un côté par un bord incliné 130 et du côté opposé par une languette 131 dont le sommet définit un rétrécissement de l'ouverture de l'encoche 115.

La languette 131 définit avec le fond de l'encoche une échancrure 133.

Le bord 130 est incliné vers le fond de l'encoche 115 et vers la languette 131.

La languette 131 présente une certaine flexibilité, qui facilite l'insertion du coussinet dans la gorge 112.

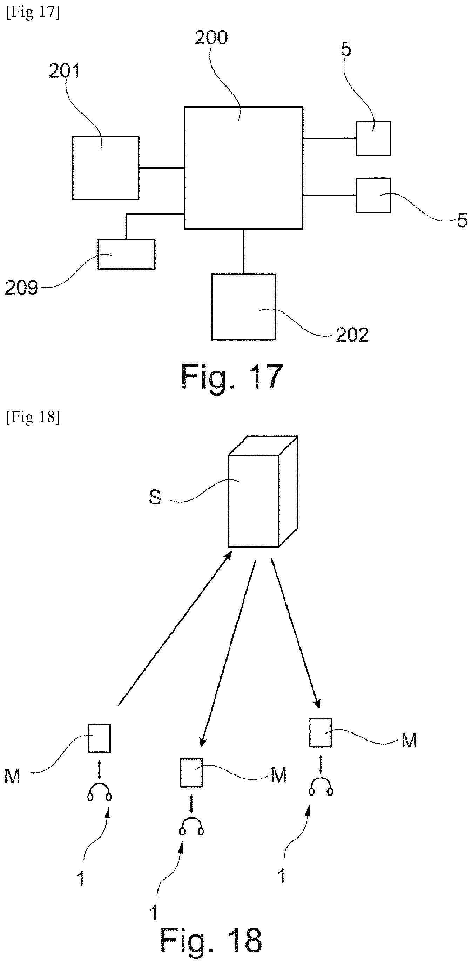

Le casque 1 comporte, comme illustré sur la figure 17, une unité centrale 200 qui gère son fonctionnement. Il s'agit par exemple d'une unité centrale à microcontrôleur, faisant partie du circuit électronique 20 et programmée pour assurer les différentes fonctions du casque. Cette unité centrale 200 peut notamment comporter un lecteur audio, permettant de lire des fichiers audio enregistrés dans la mémoire interne 202 du casque, par exemple des fichiers aux formats d'extension .mp3, .wav, .aif, .caf, .cda, .raw .fla, .m4a, .wma, .vqf, .aac, .mpx4, entre autres, l'invention n'étant pas limitée à un format particulier.

Sur la figure 17, on a représenté schématiquement les haut-parleurs 5 et l'interface utilisateur 201, laquelle comporte tous moyens permettant à l'utilisateur d'entrer des instructions, et notamment les différents boutons de commande décrits plus haut, ainsi de préférence qu'une interface vocale, l'unité centrale 200 étant avantageusement configurée pour permettre une commande vocale de certaines fonctions du casque via de préférence le ou les microphones intégrés aux écouteurs.

La mémoire interne 202 est par exemple une carte mémoire, notamment sous forme de carte SD, reçue dans un connecteur interne 204 correspondant du circuit électronique principal. Par « carte SD » il faut comprendre tout format de carte mémoire, notamment micro SD ou analogue.

La mémoire interne 202 a une capacité qui est de préférence supérieure ou égale à 128 Go.

Le casque 1 comporte un circuit qui lui permet de communiquer par une liaison sans fil, par exemple Bluetooth, avec un terminal connecté à Internet, par exemple un téléphone portable M, comme illustré à la figure 18.

Un contenu stocké sur ce terminal M peut être enregistré sur la mémoire interne du casque.

Le terminal M peut télécharger d'un serveur une application offrant de nombreuses fonctionnalités, comme décrit ci-après.

L'application peut notamment permettre à l'utilisateur du casque de partager de façon quasi-instantanée un contenu avec au moins un autre utilisateur équipé d'un casque similaire, appairé également à un terminal similaire relié à Internet.

Les casques 1 pouvant partager un contenu sont enregistrés sur un serveur S.

L'application permet à l'utilisateur qui souhaite partager un contenu de sélectionner à l'étape 300 au moins un contenu à écouter et au moins un autre utilisateur avec qui il souhaite partager l'écoute de ce contenu. L'application est programmée pour uploader le contenu ainsi sélectionné vers un serveur de streaming, qui dans l'exemple illustré est supposé être le même serveur S, mais qui pourrait être différent.

Le serveur de streaming peut relayer le contenu ainsi uploadé vers le ou les utilisateurs sélectionnés et ainsi envoyer vers le ou les utilisateurs sélectionnés pour partager le contenu, l'url du flux partagé, l'identifiant de l'utilisateur souhaitant partager un contenu, notamment le nom de l'utilisateur, ainsi qu'un identifiant du contenu partagé, notamment le nom du morceau partagé. Le cas échéant, le serveur transmet également l'auteur du morceau, sa durée, le nombre de personnes avec qui le morceau est partagé, la durée du flux, la résolution audio, le nom de l'album, une image de la pochette du morceau, le nom de l'éditeur et/ou de la maison de disques.

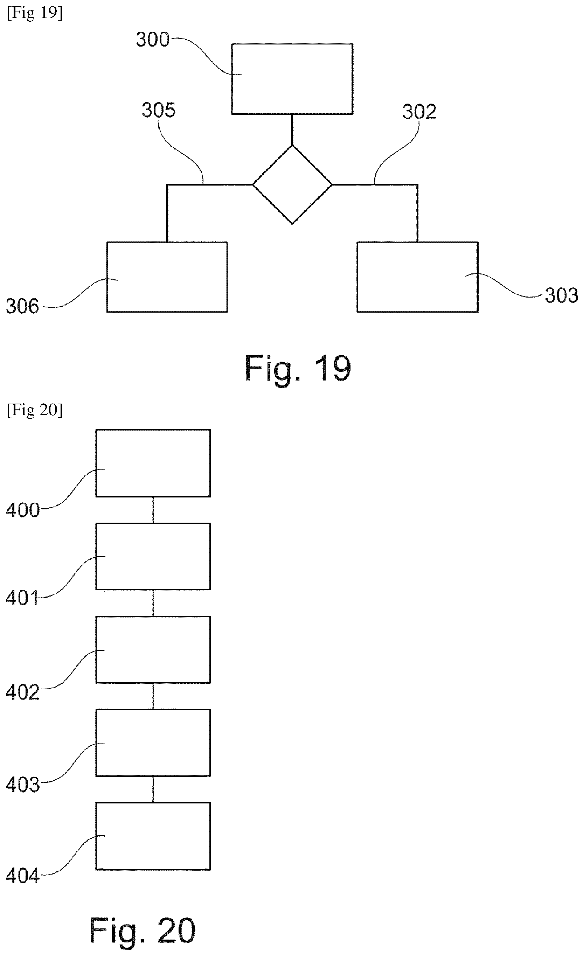

Si l'utilisateur sélectionné pour partager le contenu a déjà son application ouverte sur son terminal, ce qui correspond à l'étape 302 sur la figure 19, l'application génère une notification visuelle, tactile et/ou sonore invitant l'utilisateur à écouter le contenu partagé, et si l'utilisateur accepte de démarrer le streaming du contenu partagé, l'application interrompt à l'étape 303 l'écoute en cours pour transmettre le flux du contenu partagé au casque pour son écoute en temps quasi-réel.

Si l'application n'est pas ouverte sur le terminal de l'utilisateur, ce qui correspond à l'étape 304 sur la figure 19, le terminal affiche à l'étape 306 une notification liée à l'application qui invite l'utilisateur à ouvrir l'application afin d'écouter le contenu partagé en streaming. La personne qui reçoit le morceau partagé peut uniquement l'écouter, le titre restant la propriété de l'expéditeur. L'application peut être réalisée de telle sorte qu'un morceau partagé, une fois expiré, peut être acheté ultérieurement via un service musical depuis l'application.

Le cas échéant, l'application permet également aux utilisateurs partageant ainsi un contenu d'échanger par messages écrits, audio ou vidéo, via leurs applications ou des applications de messagerie dédiées. Ainsi, l'application peut proposer un « chatroom » lui permettant d'échanger instantanément sur le morceau partagé.

Le casque 1 comporte de préférence un identifiant stocké de façon cryptée dans sa mémoire 202.

Dans ce cas, le circuit électronique du casque, l'application et le serveur sont avantageusement agencés pour permettre la mise en œuvre du procédé d'authentification suivant.

Tout d'abord, le procédé comporte l'étape consistant à appairer le casque 1 à un terminal M exécutant l'application, ce qui correspond à l'étape 400 sur la figure 20.

Ensuite, ce qui correspond à l'étape 401, le casque transmet à l'application l'identifiant crypté contenu dans sa mémoire.

L'application invite alors, l'étape 402, l'utilisateur à saisir sur le terminal un code fourni avec le casque lors de son acquisition, ce code étant par exemple un numéro de série inscrit sur une carte d'authentification. L'authentification du produit peut encore s'effectuer en scannant un QR code présent sur la carte d'authentification à l'aide d'un fonction de scanner permise par l'application.

L'application compare à l'étape 403 le code avec l'identifiant décrypté, et en cas de correspondance entre les deux, rend possible à l'étape 404 l'enregistrement du casque sur le serveur distant.

Cette étape de comparaison doit se comprendre au sens large, et porte sur une comparaison directe du code et de l'identifiant décrypté, ou d'une comparaison indirecte, par exemple d'un hash du code et d'un hash de l'identifiant.

Une fois cette comparaison effectuée, si celle-ci s'avère positive, le serveur peut mémoriser s'il ne les connaît pas déjà le numéro de série du casque, une adresse mail de l'utilisateur associé au casque et son numéro de téléphone.

En cas de connexion du casque à une application qui ne le reconnaît pas, suite par exemple à un transfert de propriété du casque ou de vol de celui-ci, l'application demande à l'utilisateur le numéro de série du casque pour permettre à l'utilisateur d'accéder aux fonctionnalités de l'application.

Le casque 1 est de préférence configuré pour permettre de visualiser avec l'application s'exécutant sur le terminal appairé la liste des fichiers enregistrés dans la mémoire interne du casque 1, et d'effectuer des suppressions ou des ajouts.

L'application peut être agencée pour afficher une page permettant à l'utilisateur de sélectionner depuis le terminal appairé la source qu'il souhaite écouter.

L'invention n'est pas limitée à l'exemple qui vient d'être décrit.

Par exemple, on peut apporter de nombreuses modifications au casque, selon les fonctionnalités recherchées. En particulier, la manière dont les écouteurs sont reliés à l'arceau de tête peut être modifiée, de même que la façon dont les haut-parleurs sont montés à l'intérieur des écouteurs.

On peut adjoindre au casque une fonctionnalité de réduction du bruit ambiant, si cela est souhaité.

## Revendications

1. Casque stéréo (1) comportant au moins :
- Deux écouteurs (2) présentant chacun un boîtier (4),
- un arceau de tête (3) reliant les boîtiers (4) des écouteurs,
- au moins un circuit électronique (20) logé au moins partiellement dans le boîtier de l'un au moins des écouteurs, configuré pour permettre d'appairer le casque avec un terminal distant (M) tel qu'un téléphone portable et d'établir une liaison sans fil avec celui-ci, ce circuit électronique comportant :
∘ Une mémoire interne (202) de plus de 32 Go de capacité,
∘ un lecteur audio permettant de lire des fichiers audio, notamment ceux enregistrés dans cette mémoire interne, et
∘ une interface (201) permettant de sélectionner comme source à diffuser dans les écouteurs le lecteur audio du casque ou le terminal appairé (M).

2. Casque selon la revendication 1, la mémoire interne (202) étant non amovible pour l'utilisateur.

3. Casque selon l'une des revendications 1 et 2, chaque écouteur (2) comportant un coussinet (7) de forme annulaire, de préférence à mémoire de forme, adapté à venir en appui sur l'oreille de l'utilisateur, monté de façon amovible sur le boîtier (4) de l'écouteur, le boîtier d'écouteur présentant de préférence une gorge périphérique (112), cette gorge étant de préférence délimitée du côté du coussinet par la bordure d'une coupelle de support (110) d'un haut-parleur (5) et de l'autre côté par un couvercle intérieur (80) du boîtier (4) de l'écouteur, la coupelle de support (110) présentant de préférence une encoche (115) ouverte sur sa périphérie, facilitant l'insertion du coussinet dans la gorge en vue de son montage et/ou de sa séparation du boîtier.

4. Casque selon l'une quelconque des revendications précédentes, le boîtier comportant un corps (10) présentant une paroi latérale, notamment cylindrique, et une extension supérieure (11), de raccordement à l'arceau de tête, venue de moulage avec la paroi latérale, cette extension présentant de préférence une forme arquée, et logeant au moins partiellement un mécanisme à glissière télescopique (70) permettant de régler la hauteur de l'arceau de tête par rapport aux boîtiers des écouteurs, l'arceau de tête comportant de préférence une mousse à mémoire de forme (53) disposée entre un support extérieur (52), de forme arquée, et une pièce d'appui intérieure (50), réalisée dans une matière élastomère, de préférence un silicone, en particulier un silicone traité à l'huile.

5. Casque selon l'une quelconque des revendications précédentes, l'un des boîtiers d'écouteurs au moins présentant sur sa face extérieure une pièce centrale (40), notamment en forme de disque, mobile relativement au corps du boîtier, et sur laquelle l'utilisateur peut appuyer, cette pièce permettant d'actionner un interrupteur (33) du circuit électronique (20) du casque, le circuit électronique étant de préférence réalisé de telle sorte que l'interrupteur commande la marche/arrêt du casque en cas d'appui long, la lecture/pause ou le décrocher/raccrocher, en cas d'appui bref, le boîtier (4) qui loge au moins partiellement le circuit électronique comportant de préférence une paroi de fermeture du logement recevant le circuit électronique (20), munie d'un renfoncement (31) qui accueille une carte (32) portant ledit interrupteur (33), ce renfoncement étant fermé au moins partiellement par la pièce centrale (40).

6. Casque selon l'une quelconque des revendications précédentes, l'un des boîtiers des écouteurs comportant un capot amovible (16) en définissant la face extérieure, ce capot amovible permettant d'accéder, lorsqu'enlevé, à un compartiment logeant une batterie (15).

7. Casque selon l'une quelconque des revendications précédentes, l'un des boîtiers portant une prise jack (58) de sortie d'un signal audio analogique et/ou l'un des boîtiers portant un prise jack (26) d'entrée d'un signal audio analogique, et de préférence l'un des boîtiers portant l'une des prises et l'autre boîtier l'autre prise.

8. Casque selon l'une quelconque des revendications précédentes, comportant au moins deux boutons (22, 23) disposés sur le boîtier d'un écouteur, le circuit électronique du casque étant configuré de telle sorte qu'une pression continue sur l'un des boutons corresponde à une augmentation ou à une baisse du volume selon le bouton utilisé, et qu'un double enfoncement rapproché corresponde au passage à la liste suivante ou précédente, selon le bouton utilisé.

9. Casque selon l'une quelconque des revendications précédentes, le circuit électronique comportant un identifiant qui est propre au casque, le circuit électronique étant configuré pour communiquer au terminal avec lequel il est appairé cet identifiant, cet identifiant étant de préférence stocké de façon cryptée dans la mémoire (202) du casque.

10. Casque selon l'une quelconque des revendications précédentes, le circuit électronique comportant un module de communication NFC (209).

11. Casque selon l'une quelconque des revendications précédentes, l'arceau de tête présentant une courbure autour d'un premier axe géométrique contenu dans un plan médian de part et d'autre duquel sont disposés les deux écouteurs, ainsi qu'une courbure autour d'un deuxième axe géométrique contenu dans le même plan médian mais sensiblement perpendiculaire au premier axe.

12. Procédé de partage quasi-instantané d'un contenu entre au moins deux utilisateurs équipés chacun d'un casque (1) tel que défini dans l'une quelconque des revendications précédentes et d'un terminal (M) exécutant une application de partage de contenus et auquel le casque est appairé, ces utilisateurs ayant préalablement enregistré leur casque sur un serveur, ce procédé comportant les étapes consistant à :
- Permettre à un utilisateur de sélectionner au moins un contenu à écouter et au moins un autre utilisateur avec qui il souhaite partager l'écoute de ce contenu,
- uploader le contenu vers un serveur (S) de streaming,
- relayer ce contenu ainsi uploadé vers le ou les utilisateurs sélectionnés.

13. Procédé selon la revendication 12, comportant l'envoi, vers le ou les utilisateurs sélectionnés pour partager le contenu, de l'url du flux partagé, d'un identifiant de l'utilisateur souhaitant partager un contenu, notamment le nom de l'utilisateur, et d'un identifiant du contenu partagé, et de préférence également de l'un au moins du nom du morceau partagé, de l'auteur du morceau, de sa durée, du nombre de personnes avec qui le morceau est partagé, de la durée du flux, de la résolution audio, du nom de l'album, une image de la pochette du morceau, le nom de l'éditeur et/ou de la maison de disques.

14. Procédé selon l'une des revendications 12 et 13, dans lequel :
A. dans l'hypothèse où un utilisateur sélectionné pour partager le contenu a son application déjà ouverte sur son terminal, l'application génère une notification visuelle, tactile et/ou sonore invitant l'utilisateur à écouter le contenu partagé, et si l'utilisateur accepte de démarrer le streaming du contenu partagé, l'application interrompt l'écoute en cours pour transmettre le flux du contenu partagé au casque pour son écoute en temps quasi-réel,
B. dans l'hypothèse où l'application n'est pas ouverte sur le terminal de l'utilisateur, le terminal affiche une notification liée à l'application qui invite l'utilisateur à ouvrir l'application afin d'écouter le contenu partagé en streaming.

15. Procédé pour authentifier un casque tel que défini dans l'une quelconque des revendications 1 à 12, le casque comportant un identifiant stocké de façon cryptée dans sa mémoire (202), le procédé comportant les étapes consistant à :
- Appairer le casque à un terminal (M) exécutant une application,
- transmettre à l'application l'identifiant crypté,
- saisir sur l'application un code fourni avec le casque lors de son acquisition,
- comparer le code avec l'identifiant, cette comparaison s'effectuant de façon automatisée au sein d'e l'application, et en cas de correspondance entre les deux, rendre possible l'enregistrement du casque sur un serveur distant (S),
le serveur (S) mémorisant de préférence le numéro de série du casque, une adresse mail de l'utilisateur associé au casque et son numéro de téléphone,
procédé dans lequel en cas de connexion du casque à une application qui ne le reconnaît pas, suite par exemple à un transfert de propriété du casque ou de vol de celui-ci, l'application demande, de préférence, à l'utilisateur le numéro de série du casque pour permettre à l'utilisateur d'accéder aux fonctionnalités de l'application.
